# EUROPÄISCHE PATENTSCHRIFT

(11) **EP 1 735 225 B1**
(45) Veröffentlichungstag und Bekanntmachung des Hinweises auf die Patenterteilung: **11.06.2008**
(21) Anmeldenummer: 05714200.2
(22) Anmeldetag: 06.04.2005
(51) Int. Cl.: B65G 47/82

(54) **ÜBERGABEVORRICHTUNG ZUM SEITLICHEN AUSSCHLEUSEN VON FÖRDERGUT SOWIE EINE FÖRDEREINRICHTUNG**
TRANSFER DEVICE FOR THE LATERAL EJECTION OF TRANSPORTED GOODS AND TRANSPORT UNIT
DISPOSITIF DE TRANSFERT PERMETTANT L'EXPULSION LATERALE DE MARCHANDISES TRANSPORTEES, ET DISPOSITIF DE TRANSPORT

(30) Priorität: 09.04.2004 AT 6282004
(43) Veröffentlichungstag der Anmeldung: 27.12.2006
(73) Patentinhaber: TGW Mechanics GmbH, 4600 Wels (AT)
(72) Erfinder: RADWALLNER, Günther, 4840 Vöcklabruck (AT); HANSL, Rudolf, 4020 Linz (AT)
(74) Vertreter: Secklehner, Günter
(86) Internationale Anmeldenummer: PCT/AT2005/000119
(87) Internationale Veröffentlichungsnummer: WO 2005/097638

(56) Entgegenhaltungen:
- EP-A- 1 260 467
- WO-A-03/064303
- DE-U1- 29 807 105
- US-B1- 6 516 937

## Beschreibung

Die Erfindung betrifft eine Übergabevorrichtung zum seitlichen Ausschleusen von Fördergütern aus einer Fördereinrichtung und eine mit dieser ausgestattete Fördereinrichtung, wie in den Oberbegriffen der Ansprüche 1 und 22 beschrieben.

Aus der WO 03/064303 A1 ist eine Anlage für den Transport von Fördergut in Form von Rollen zwischen zwei winkelig zueinander verlaufenden Fördereinrichtungen bekannt, bei der zwischen den beiden Fördereinrichtungen eine Übergabevorrichtung angeordnet ist. Die Übergabevorrichtung umfasst zwei mit Abstand oberhalb einer Förderebene der Fördereinrichtungen angeordnete, parallele Zugmitteltriebe, die unter einem Winkel zur ersten Fördereinrichtung (L 1) in Richtung der aus der Geschwindigkeit der ersten Fördereinrichtung (L 1) und der zu dieser quergerichteten Übergabegeschwindigkeit resultierenden Geschwindigkeit verlaufen und jeweils einen um ein Antriebs- und Umlenkrad geführten Zahnriemen aufweisen. Die Antriebs- und Umlenkräder sind an Rahmen drehbar gelagert, wobei die Antriebsräder mittels zwei an eine gemeinsame Antriebswelle gekuppelte Zugmitteltriebe synchron angetrieben sind. Diese Antriebswelle ist oberhalb der Übertragungsvorrichtung an den beiden Rahmen drehbar gelagert und mit nur einem Elektromotor gekuppelt. Zusätzlich weist die Übergabevorrichtung eine Abschiebeeinheit mit zwei sich quer zur Förderrichtung der Fördergüter zwischen den parallelen Zugmitteltrieben erstreckenden, stangenartigen Abschiebeelemente (11) auf, die jeweils mit ihren Enden über ein Kugelgelenk (10, 10') und Mitnehmer (9, 9') mit den Zahnriemen gelenkig verbunden sind. Jedes Abschiebeelement trägt im Bereich eines Endes ein tellerförmiges Anschlagelement (12). Soll das Fördergut von der ersten Fördereinrichtung auf die zweite Fördereinrichtung übergeben werden, wird das Abschiebeelement (11) vom oberen Trum der Zugmitteltriebe in Richtung zum unteren Trum der Zugmitteltriebe bewegt, hinter dem Fördergut positioniert und mit der Vorschubbewegung der Zahnriemen gegen das Fördergut angedrückt sowie das Anschlagelement seitlich am Fördergut angelegt. Das Fördergut wird dann in zur Längserstreckung der Zugmitteltriebe paralleler Richtung abgeschoben. Um relativ lange Fördergüter von der ersten Fördereinrichtung auf die zweite Fördereinrichtung über die Übergabevorrichtung transportieren zu können, ist zusätzlich eine parallel zu den Zugmitteltrieben verlaufende Seitenführung (13) erforderlich, an der das Fördergut während seiner Übergabe mit der vorderen Kante gleitend anliegt. Dabei besteht die Gefahr, dass bereits eine geringfügige Beschädigung der an der Seitenführung anliegenden Kante, eine unerwünschte Änderung der Reibung zwischen Fördergut und Seitenführung eintritt und das Fördergut zwischen dem Abschiebeelement und der Seitenführung verkantet oder verdreht auf die zweite Fördereinrichtung abgeschoben wird. Darüber hinaus ist bei dieser bekannten Ausführung ein großer Lückenabstand zwischen zwei auf der ersten Fördereinrichtung herantransportierten, aufeinander folgenden Fördergütern erforderlich, damit das Abschiebeelement während seiner Bewegung entlang der Umlenkbahn vom oberen Trum zum unteren Trum des Zahnriemens kollisionsfrei in die Lücke eintauchen kann, sodass bei vielen praktischen Anwendungen die Durchsatzleistung zu gering ist.

Aus der DE 298 07 105 U1 ist eine Fördereinrichtung mit einer Übergabevorrichtung bekannt, mit der bei angetriebener Rollenbahn das Fördergut seitlich aus der Fördereinrichtung auf eine, der Übergabevorrichtung in Abgaberichtung der Fördergüter nachgeordnete, weitere Fördereinrichtung ausgeschleust werden kann. Die Übergabevorrichtung weist zur seitlichen Ausschleusung von Fördergut, mindestens zwei schräg zur Förderrichtung in jeweils einem Durchmesser reduzierten Bereich zwischen mindestens zwei Segmenten der Förderrollen verlaufende Kettenstränge auf, an denen über die Förderebene der Förderrollen hinausstehende, zapfenartige Abschiebeelemente befestigt sind. Die Kettenstränge sind dabei nur über eine Teilbreite eines durch die Rollenbahn gebildeten Förderweges vorgesehen und erstrecken sich im Abstand parallel zueinander. Bei dieser bekannten Übergabevorrichtung können nur Fördergüter mit gleicher Längenabmessung störungsfrei ausgeschleust werden. Sofern die Längenabmessung der seitlich auszuschleusenden Fördergüter variiert, sind Umrüstungsarbeiten notwendig. Entweder wird der Abstand zwischen den parallelen Zugmittelsträngen vergrößert oder es werden zusätzliche Zugmittelstränge angebracht.

Eine Fördereinrichtung mit einer anderen Ausgestaltung einer Übergabevorrichtung für das seitliche Ausschleusen von Fördergut aus dieser Fördereinrichtung auf eine der Übergabevorrichtung in Abgaberichtung der Fördergüter nachgeordnete weitere Fördereinrichtung ist aus der DE 39 16 424 C2 bekannt, welche Übergabevorrichtung mit Abstand oberhalb der Fördereinrichtungen angeordnete und schräg zur Förderrichtung der Fördereinrichtungen verlaufende Zugmitteltriebe umfasst, an denen im Abstand hintereinander Mitnehmer unbeweglich befestigt sind. Auf jedem Mitnehmer ist eine zwischen einer horizontalen Ausgangsstellung und einer vertikalen, parallel zur Förderrichtung der Fördereinrichtungen ausgerichteten Arbeitsstellung um eine in Förderrichtung der Fördereinrichtungen verlaufende Schwenkachse verschwenkbare Förderplatte angeordnet. Mittels dieser Förderplatte kann das Fördergut im Bereich der oberen Kante seitlich ergriffen und ausgeschleust werden. Die Förderplatten sind durch einen Zahnstangenantrieb und eine Steuerkurve betätigbar, letztere parallel zu den Zugmitteltrieben angeordnet ist. Bei dieser bekannten Übergabevorrichtung ist eine Mindesthöhe der Fördergüter zwangsweise gefordert, wodurch der Einsatzbereich dieser Fördereinrichtung stark eingeschränkt ist.

Die EP 0 062 233 A2 offenbart eine Fördereinrichtung mit einer Übergabevorrichtung, mit der das Fördergut seitlich aus der ersten Fördereinrichtung auf eine der Übergabevorrichtung in Abgaberichtung der Fördergüter nachgeordnete, weitere Fördereinrichtung ausgeschleust werden kann. Die Übergabevorrichtung ist als Kettenförderer mit zwei zueinander parallel, angeordneten, endlosen Ketten gebildet. Die Ketten sind mit in deren Umlaufrichtung im Abstand und parallel zur Längsrichtung der ersten Fördereinrichtung paarweise angeordneten, noppenartigen Mitnehmern versehen, die über eine Förderebene der ersten Fördereinrichtung vorstehen und zum Ausschleusen eines Fördergutes direkt gegen dessen Seitenwand angelegt werden. Die Ketten sind unterhalb der Förderebene der ersten Fördereinrichtung angeordnet. Auch nach dieser Ausgestaltung der Übergabevorrichtung ist eine Mindestlänge bzw. Breite der Fördergüter zwangsweise gefordert, wodurch der Einsatzbereich dieser Fördereinrichtung stark eingeschränkt ist.

Die WO 98/57875 A1 offenbart eine Förderanlage zum Sortieren von Fördergut, mit einer ersten Fördereinrichtung und entlang von dieser hintereinander angeordneten Übergabevorrichtungen, mit denen die auf der Fördereinrichtung ankommenden Fördergüter wahlweise von einer der Übergabevorrichtungen auf eine diesen jeweils nachgeordnete Fördereinrichtung oder Rutsche verteilt bzw. ausgeschleust werden können. Jede Übergabevorrichtung weist eine Vielzahl von in gegenseitigem Abstand angeordnete, motorisch angetriebene Rollen und zwischen benachbarten Rollen senkrecht zur Förderrichtung der Fördergüter entlang der Fördereinrichtung parallel zueinander verlaufende Zugmitteltriebe auf. Jeder Zugmitteltrieb ist an einen Servomotor gekoppelt, der das Zugmittel des Zugmitteltriebes gesteuert antreibt. Die Zugmittel der Zugmitteltriebe sind in Abgaberichtung der Übergabevorrichtung mit mehreren im Abstand voneinander angeordneten und bis über eine von der Fördereinrichtung ausgebildete Förderebene vorstehenden, noppenartigen Mitnehmern versehen, mittels welcher ein Fördergut von der ersten Fördereinrichtung auf eine an die Übergabevorrichtung anschließende weitere Fördereinrichtung abgeschoben wird. Die Servomotoren der Zugmitteltriebe und die Antriebsmotoren der Rollen sind an eine Steuerung angeschlossen, die ihrerseits in Abhängigkeit von Sensorsignalen und Daten über die Zielstation oder Informationen über das Fördergut und dgl. Steuersignale berechnet, mit denen die Antriebs- und Servomotoren der Rollen und Zugmitteltriebe selektiv angesteuert werden. Als nachteilig erweist sich der hohe steuerungstechnische Aufwand zur Ansteuerung der Zugmitteltriebe und somit der Mitnehmer.

Aufgabe der Erfindung ist es, eine einfach aufgebaute Übergabevorrichtung zu schaffen, mit der Fördergüter unterschiedlicher Längen- und gegebenenfalls Höhenabmessung zuverlässig aus einer ersten Fördereinrichtung auf eine zweite Fördereinrichtung ausgeschleust werden können, die eine hohe Durchsatzleistung an der die Übergabevorrichtung aufweisenden, ersten Fördereinrichtung und Platz sparende Anordnung in einem Fördersystem erlaubt.

Die Aufgabe der Erfindung wird durch die Merkmale der Ansprüche 1 und 22 gelöst. Die sich daraus ergebenden Vorteile sind, dass über das profilartige Abschiebeelement der Abschiebeeinheit Fördergüter unterschiedlicher Längen- und gegebenenfalls Höhenabmessung zuverlässig aus der ersten Fördereinrichtung auf die weitere Fördereinrichtung seitlich ausgeschleust werden können und nicht auf Fördergüter einer einzigen Längen- und gegebenenfalls Höhenabmessung beschränkt ist. Um eine möglichst hohe Durchsatzleistung an der Übergabevorrichtung zu erreichen, wird das Fördergut bei angetriebenem Förderorgan seitlich aus der ersten Fördereinrichtung ausgeschleust. Weiters ist von Vorteil, dass das Abschiebeelement in seiner Ausgangsstellung seitlich neben dem Förderweg der Fördergüter positionierbar ist und in seiner Arbeitsstellung ausschließlich gegen die parallel zur Förderrichtung verlaufende in Bezug auf die Abgaberichtung hintere Seitenwand angelegt wird, womit einerseits Beschädigungen, insbesondere Deformationen, am Fördergut das ordnungsgemäße Ausschleusen desselben nicht behindern und andererseits ein enger Lückenabstand zwischen zwei auf der ersten Fördereinrichtung aufeinander folgend transportierten Fördergütern gewählt und die Durchsatzleistung an der Übergabevorrichtung erhöht werden kann. Darüber hinaus wird über die Gelenkanordnungen sichergestellt, dass das Abschiebeelement stets parallel zur Förderebene und im Wesentlichen parallel zur Förderrichtung der Fördergüter gehalten ist. Somit kann ein kleiner Luftspalt zwischen der Unterkante vom das Förderorgan überfahrenden Abschiebeelement und des Förderorganes gewählt und das Abschiebeelement nur knapp oberhalb der unteren Längskante an die Seitenwand vom Fördergut angelegt werden, sodass nunmehr auch Fördergüter mit niedriger Formstabilität der Seitenwände verformungsfrei abgeschoben werden können. Da nun bereits zwei Zugmitteltriebe für den Antrieb eines profilartigen Abschiebeelementes ausreichend sind, ist die Übergabevorrichtung einfach und preiswert aufgebaut.

Aber auch die Ausgestaltungen nach den Ansprüchen 2 und 21 sind von Vorteil, da die Länge vom Abschiebelement so ausgelegt ist, dass das auszuschleusende Fördergut zuverlässig am Abschiebeelement seitlich geführt ist, womit einerseits der Mehraufwand für die Anordnung zusätzlicher Führungseinrichtungen vollständig entfallen kann und andererseits die Genauigkeitsanforderung an die Längspositionierung des Fördergutes gegenüber dem profilartigen Abschiebeelement geringer ist, da das auszuschleusende Fördergut während seinem Transport in Abgaberichtung entlang dem Abschiebeelement in begrenztem Maße entlang gleiten kann. Demnach können die Fördergüter auch bei aufgrund dem unterschiedlichen Gewicht der Fördergüter und der unterschiedlichen Reibungsverhältnisse zwischen Abschiebeelement und Fördergut hervorgerufener, ungenauer Längspositionierung des Fördergutes gegenüber dem profilartigen Abschiebeelement, ordnungsgemäß sowie lagerichtig ausgeschleust werden.

Unterschiedliche vorteilhafte Anordnungen der am Rahmen der ersten Fördereinrichtung gelagerten Zugmitteltriebe sind in den Ansprüchen 3 und 4 beschrieben.

Einfache Ausgestaltungen des Abschiebeelementes sind in den Ansprüchen 5 und 19 beschrieben.

Von Vorteil sind auch die Fortbildungen nach den Ansprüchen 6 und 20, wobei das Abschiebeelement ausgehend von den Zugmitteltrieben von unten bis über die Förderebene hinausragt und somit ein kompakter Aufbau der Übergabevorrichtung geschaffen ist.

Vorteilhaft ist auch die Ausgestaltung nach Anspruch 7, womit erreicht wird, dass das Fördergut unter einem Winkel aus der ersten Fördereinrichtung auf die weitere Fördereinrichtung ausgeschleust wird und dadurch der Lückenabstand zwischen zwei aufeinander folgenden Fördergütern weiters optimiert und die Durchsatzleistung der Übergabevorrichtung verbessert wird.

Gemäß Anspruch 8 wird sichergestellt, dass das Abschiebeelement einerseits bereits vor seinem Eintritt in den Bereich des Förderweges so positioniert ist, dass eine vom Abschiebeelement ausgebildete Führungsfläche und die Förderebene annähernd einen rechten Winkel einschließen und ein herantransportiertes Fördergut beschädigungsfrei ausgeschleust werden kann. Andererseits kann das Abschiebeelement auf der in Abgaberichtung der Fördergüter vorderen Abgabeseite so weit aus dem Förderweg der Fördergüter bewegt werden, dass die Fördergüter, die nicht zur Seite aus der ersten Fördereinrichtung ausgeschleust werden, die Übergabevorrichtung ungehindert passieren können.

Die Ausgestaltung nach den Ansprüchen 9 und 11 erlaubt eine besonders Platz sparende Anordnung der Übergabevorrichtung an der ersten Fördereinrichtung.

Die Weiterbildung nach Anspruch 10 ist von Vorteil, da dadurch der Abstand zwischen der ersten Fördereinrichtung und der der Übergabevorrichtung in Abgaberichtung nachgeordneten, weiteren Fördereinrichtung gering gehalten werden kann.

Die Ausbildungen nach den Ansprüchen 12 und 13 ermöglichen das lagegenaue Ausschleusen von Fördergütern aus der ersten Fördereinrichtung auf die weitere Fördereinrichtung.

Von Vorteil ist auch die Ausgestaltung nach Anspruch 14, wodurch ein Fördergut ungehindert ausgeschleust werden kann.

Eine vorteilhafte Ausbildung der Gelenkanordnung ist im Anspruch 15 beschrieben.

Die Ausgestaltung nach Anspruch 16 zeichnet sich durch seinen einfachen Aufbau aus und kann durch geeignete Wahl des Elastizitätsmoduls vom elastischen Federelement, die Elastizität in Abgaberichtung ausgenutzt werden, um den Stoß, der eintritt, wenn das Abschiebeelement gegen das auszuschleusende Fördergut anschlägt, zu dämpfen.

Schließlich sind auch die Fortbildungen nach den Ansprüchen 17 und 18 von Vorteil, womit die Durchsatzleistung an der Übergabevorrichtung erhöht werden kann.

Die Erfindung wird im Nachfolgenden anhand der in den Zeichnungen dargestellten Ausführungsbeispiele näher erläutert.

### Es zeigen:

- Fig. 1: eine erfindungsgemäße Fördereinrichtung und eine an dieser angeordnete, erfindungsgemäße Übergabevorrichtung sowie eine der Übergabevorrichtung in Abgaberichtung nachgeordnete, weitere Fördereinrichtung, in Draufsicht und stark vereinfachter Darstellung;
- Fig. 2: die Übergabevorrichtung nach Fig. 1 und ein Abschnitt der andeutungsweise dargestellten, ersten Fördereinrichtung, in Draufsicht und stark vereinfachter Darstellung;
- Fig. 3: eine Ansicht der Übergabevorrichtung in Umlaufrichtung eines diese aufweisenden Zugmitteltriebes, mit einem Antriebsmotor und den Abschiebeeinheiten, in stark vereinfachter Darstellung;
- Fig. 4: einen Ausschnitt der ersten Fördereinrichtung und des profilartigen Abschiebeelementes, in Ansicht auf die Innenseite eines Rahmenprofils der ersten Fördereinrichtung, gemäß den Linien IV-IV in Fig. 3 und in stark vereinfachter Darstellung;
- Fig. 5: die Abschiebeeinheit mit dem profilartigen Abschiebeelement und dem Paar von an den Zugmitteln der Zugmitteltriebe befestigten Mitnehmern sowie den Gelenkanordnungen zwischen dem Abschiebeelement und den Mitnehmern, in Draufsicht und vereinfachter Darstellung;
- Fig. 6: die Abschiebeeinheit, geschnitten gemäß den Linien VI-VI in Fig. 5 und in vereinfachter Darstellung;
- Fig. 7: die Abschiebeeinheit mit einer anderen Ausführung der Gelenkanordnung in Seitenansicht, teilweise geschnitten und vereinfachter Darstellung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

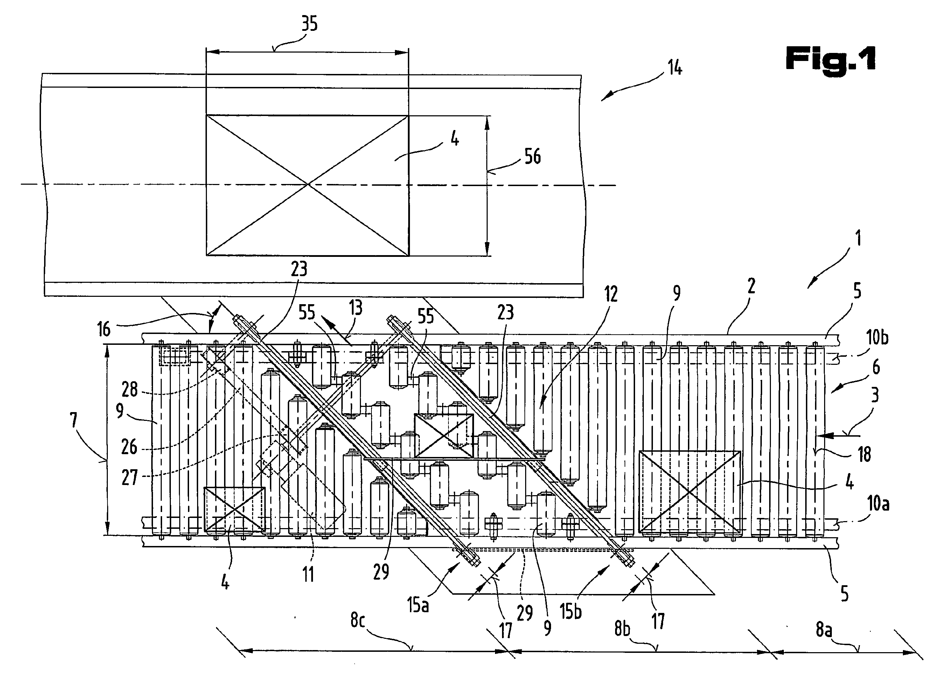

Die Fig. 1 zeigt einen Ausschnitt aus einer erfindungsgemäßen Fördereinrichtung 1. Diese umfasst ein Rahmen 2 mit zwei in Förderrichtung - gemäß Pfeil 3 - von Fördergütern 4 verlaufenden Rahmenprofilen 5, die über mehrere voneinander beabstandet angeordnete Querträger (nicht dargestellt) verbunden sind und somit auf Abstand gehalten werden. An den Rahmenprofilen 5 ist jeweils ein in Förderrichtung - gemäß Pfeil 3 - verlaufendes und an diesen befestigtes, langgestrecktes Führungsprofil (nicht dargestellt) vorgesehen, über welche ein Förderweg 6 in seiner Breite 7 seitlich begrenzt ist. Die Fördergüter 4 werden entlang dem Förderweg 6 gefördert. Der Förderweg 7 der Fördereinrichtung 1 ist in Förderrichtunggemäß Pfeil 3 - der Fördergüter 4 in drei unmittelbar aneinander angrenzende Förderabschnitte 8a, b, c unterteilt. Die Fördergüter 4 sind vorzugsweise quaderförmig ausgebildet.

Nach einer bevorzugten Ausführung ist die Fördereinrichtung 1 durch einen Rollenförderer gebildet, der in jedem Förderabschnitt 8a, b, c eine Vielzahl von drehbaren Förderrollen als Förderorgane 9 aufweist, die zwischen den Rahmenprofilen 5 gehalten und im Abstand zueinander längs des Förderweges 6 angeordnet sind. Wie schematisch in strichpunktierte Linien eingetragen, ist für den Antrieb der Förderrollen in den Förderabschnitten 8a, c ein ständig umlaufendes, endloses Zugmittel 10a, insbesondere Riemen, vorgesehen, das unterhalb der Förderrollen angeordnet und gegen jede sich über die gesamte Breite 7 zwischen den Rahmenprofilen 5 erstreckende Förderrolle im Förderabschnitten 8a und jede einzelne Förderrolle im Förderabschnitt 8c gedrückt ist. Für den Antrieb der nur über einen Teil der Breite 7 zwischen den Rahmenprofilen 5 angeordneten Förderrollen im Förderabschnitten 8a und den äußeren Förderrollen im mittleren Förderabschnitt 8b, ist ein ständig umlaufendes, endloses Zugmittel 10b, insbesondere Riemen, vorgesehen, das unterhalb der Förderrollen angeordnet und gegen die benachbart zum einen Rahmenprofil 5 gelagerten Förderrollen der Förderabschnitte 8a, b gedrückt ist. Die übrigen inneren Förderrollen im mittleren Förderabschnitt 8b sind über schematisch dargestellte Übertriebsräder 55 mit den äußeren, angetriebenen Förderrollen gekuppelt. Die Übertriebsräder 55 sind dazu achsparallel zu den Förderrollen und zwischen diesen an der Unterseite des Förderabschnittes 8b angeordnet sowie gegen zwei benachbart nebeneinander liegende Förderrollen gedrückt. Die Zugmittel 10a, b sind bevorzugt über nur einen gemeinsamen Antriebsmotor (nicht dargestellt) synchron angetrieben.

Die Förderabschnitte 8a, b, c bzw. deren Förderrollen sind vorzugsweise synchron und gleichsinnig angetrieben, sodass die Fördergüter 4 entlang dem Förderweg 6 mit gleichmäßiger Fördergeschwindigkeit gefördert werden können.

Wie nicht weiters eingetragen, ist im Rahmen 2 wenigstens ein optischer Sensor, beispielsweise eine Lichtschranke, Barcodelaser und dgl., gehalten, der die mit einem Datenträger, beispielsweise Barcodeetikette, versehenen Fördergüter 4 erfasst, die Informationen aus dem Datenträger ausliest und Steuersignale an eine Steuereinrichtung sendet, die ihrerseits einen Antriebsmotor 11 einer Übergabevorrichtung 12 ansteuert, wenn ein Fördergut 4 seitlich aus dieser ersten Fördereinrichtung 1 auf eine der Übergabevorrichtung 12 inAbgaberichtunggemäß Pfeil 13 - nachgeordnete, weitere Fördereinrichtung 14 ausgeschleust werden soll. Vorzugsweise wird bei laufenden Förderrollen das Fördergut 4 von der Fördereinrichtung 1 ausgeschleust. Dabei wird das Fördergut 4 von der ersten Fördereinrichtung 1 an die weitere Fördereinrichtung 14 lagegleich übergeben. Die weitere Fördereinrichtung 14 grenzt unmittelbar an die Übergabevorrichtung 12 an und verläuft parallel neben der ersten Fördereinrichtung 1 oder verläuft senkrecht zur ersten Fördereinrichtung 1. Die weitere Fördereinrichtung 14 ist beispielsweise durch einen Bandförderer, Rollenförderer und dgl. gebildet.

Diese erfindungsgemäße Übergabevorrichtung 14 ist, wie sie in Fig. 1 bis 3 dargestellt, im mittleren Förderabschnitt 8b der Fördereinrichtung 1 angeordnet und am Rahmen 2 gelagert. Diese weist bevorzugt nur zwei im Abstand 57 parallel erstreckende Zugmitteltriebe 15a, b auf, die unter einem Winkel 16 von kleiner 90°, vorzugsweise 45° zur Längserstreckung der ersten Fördereinrichtung 1 in Richtung der aus der Geschwindigkeit der angetriebenen Förderrollen im mittleren Förderabschnitt 8b und der zu dieser quergerichteten Übergabegeschwindigkeit resultierenden Geschwindigkeit angeordnet ist. Dieser zur Förderrichtunggemäß Pfeil 3 -parallele Abstand 57 zwischen den Zugmitteltrieben 15a, b entspricht vorzugsweise annähernd der maximalen Längenabmessung 35 des Fördergutes 4.

Wie in Fig. 1 eingetragen, ist zwischen den einander zugewandten Stirnenden der in Förderrichtung - gemäß Pfeil 3 - der Fördergüter 4 aufeinander folgenden Förderabschnitten 8a, 8b, 8c jeweils ein sich parallel zu den Zugmitteltrieben 15a, b über die gesamte Breite 7 des Förderweges 6 erstreckender Abstandsspalt 17 ausgebildet. Jeder Abstandsspalt 17 ist vom unterhalb einer horizontalen Förderebene 18 der Förderabschnitte 8a, b, c angeordneten Zugmitteltrieb 15a, b der Übergabevorrichtung 12 durchsetzt und schmäler als die minimale Längenabmessung des Fördergutes 4. Die parallelen Zugmitteltriebe 15a, b weisen die gleiche Länge auf und sind in Abgaberichtung - gemäß Pfeil 13 - gegeneinander versetzt angeordnet. In der gezeigten Ausführung ragen gegenüberliegenden Stirnenden der Zugmitteltriebe 15a, b seitlich an beiden Rahmenprofilen 5 vor und verlaufen Stirnkanten der Zugmitteltriebe 15a, b parallel zur Längsrichtung der ersten Fördereinrichtung 1. Andererseits können die schräg zur Längsrichtung der Fördereinrichtung 1 verlaufenden, versetzten Zugmitteltriebe 15a, b auch zwischen den Rahmenprofilen 5 unterhalb der Förderebene 18 angeordnet werden, wobei deren Stirnkanten ebenfalls parallel zur Längsrichtung der ersten Fördereinrichtung 1 verlaufen. Dabei können sich die Zugmitteltriebe 15a, b nur über einen Teil der Breite 7 vom Förderweg 6 oder über die gesamte Breite 7 vom Förderweg 6 erstrecken.

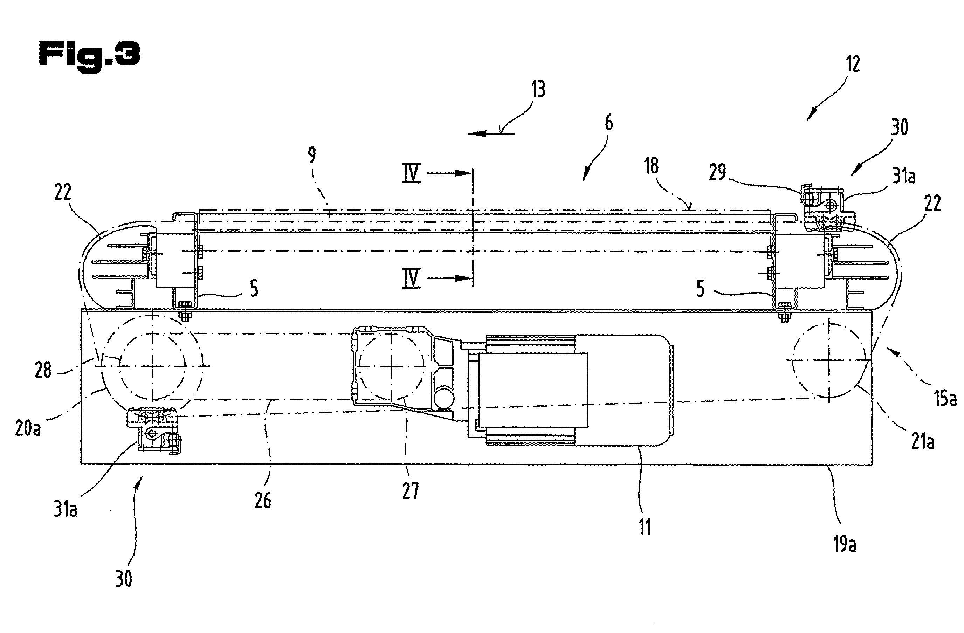

Die Zugmitteltriebe 15a, b sind, wie in Fig. 1 und 3 dargestellt, über jeweils ein Traggestell 19a, b am Rahmen 2 der ersten Fördereinrichtung 1 befestigt und umfassen jeweils ein am Traggestell 19a, b drehbar gelagertes Antriebs- und Umlenkrad 20a, b, 21 a, b, zwei Umlenkungen 22 und zumindest ein um das Antriebs- und Umlenkrad 20a, b, 21a, b sowie die Umlenkungen 22 geführtes, endlos umlaufendes Zugmittel 23. Die Umlenkungen 22 sind jeweils an den voneinander abgewandten Außenseiten der Rahmenprofilen 5 oberhalb vom Traggestell 19a, b angeordnet und mit diesen befestigt. Das einer von den Förderorganen 9 der ersten Fördereinrichtung 1 ausgebildeten Förderebene 18 zugewandte, obere Trum vom Zugmittel 23 der Zugmitteltriebe 15a, b, ist zwischen den Umlenkungen 22 auf je einer in Abgaberichtung - gemäß Pfeil 13 - verlaufenden, horizontalen Laufbahn (nicht dargestellt) geführt.

Wie in der Fig. 1 bis 3 eingetragen, ist das Antriebsrad 20a für den ersten Zugmitteltrieb 15a über ein erstes Antriebsmittel 24a mit dem Antriebsmotor 11, insbesondere Elektromotor, gekoppelt bzw. antriebsverbunden. Das Antriebsrad 20b für den zweiten Zugmitteltrieb 15b ist ebenfalls über ein zweites Antriebsmittel 24b mit dem Antriebsmotor 11 gekoppelt bzw. antriebsverbunden. Auf diese Weise wird ein synchroner Antrieb der Zugmittel 23 von den beiden Zugmitteltrieben 15a, b erreicht und laufen die Zugmittel 23 mit gleicher Umlaufgeschwindigkeit um. Das Antriebsrad 20a, b und Antriebsmittel 24a, b stehen dabei jeweils im formschlüssigen Eingriff, sodass die Antriebskraft vom Antriebsmotor 11 schlupffrei auf die Zugmittel 23 der beiden Zugmitteltrieben 15a, b übertragen wird. Das erste Antriebsmittel 24a weist nach dieser gezeigten Ausführung eine das Antriebsrad 20a tragende Antriebswelle 25a und einen Antriebsstrang 26 in Form eines endlos umlaufenden Zugmittels, wie Kette, Zahnriemen und dgl. auf, wobei der Antriebsstrang 26 um ein mit dem Antriebsmotor 11 verbundenes, angetriebenes, erstes Rad 27 und ein frei drehbares, zweites Rad 28 umgelenkt ist. Das Rad 28 und Antriebsrad 20a sind auf der Antriebswelle 25a drehstarr miteinander verbunden. Das zweite Antriebsmittel 24b weist nach dieser gezeigten Ausführung eine das Antriebsrad 20b tragende Antriebswelle 25b auf, wobei die Antriebswelle 25b direkt mit dem Antriebsmotor 11 verbunden ist und auf der das Rad 27 sowie das Antriebsrad 20b drehstarr miteinander verbunden sind.

Die in den Fig. 1 bis 3 gezeigte Übergabevorrichtung 12 weist den am Rahmen 2 gelagerten Antriebsmotor 11, die mit diesem antriebsverbundenen bzw. gekoppelten Zugmitteltriebe 15a, b, die Traggestelle 19a, b und zumindest eine Abschiebeeinheit 30 zum Ausschleusen eines Fördergutes 4 auf. Diese Abschiebeeinheit 30 weist zumindest ein Abschiebeelement 29 und zumindest ein Paar von Mitnehmern 31a, b auf, wie im Nachfolgenden beschrieben wird. Die Zugmittel 23 der Zugmitteltriebe 15a, b sind mit parallel zur Längsrichtung der ersten Fördereinrichtung 1 verlaufenden, paarweise angeordneten Mitnehmern 31a, b versehen, mit denen über noch näher zu beschreibende Gelenkanordnungen ein Abschiebeelement 29 der Abschiebeeinheit 30 gelenkig verbunden ist. Die am ersten und zweiten Zugmittel 23 bewegungsfest montierten Mitnehmer 31a, b sind voneinander getrennt ausgebildet.

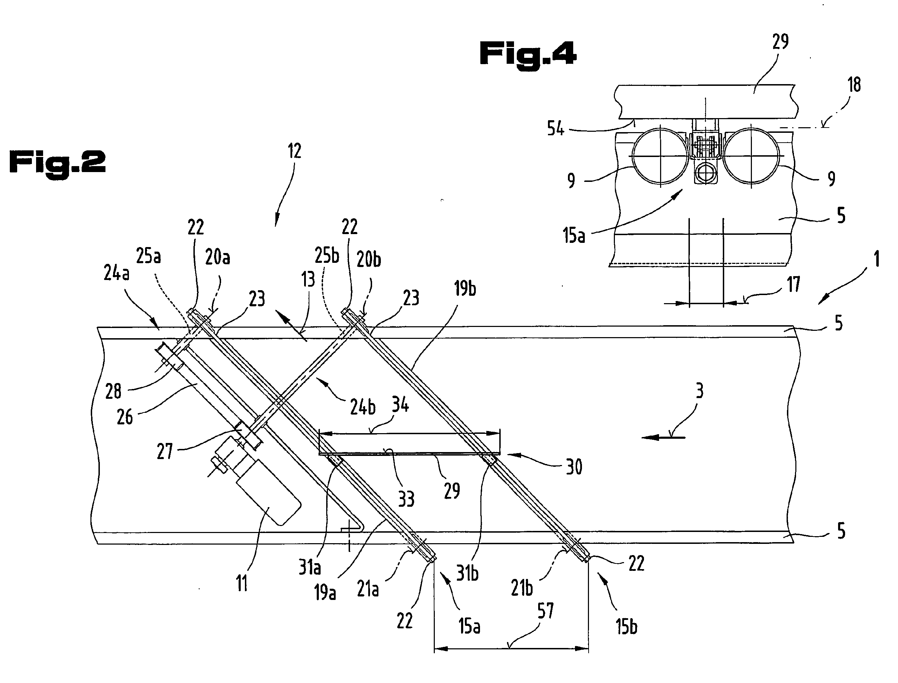

Steht eine Platz sparende Ausbildung der Übergabevorrichtung 12 im Vordergrund, werden die Zugmitteltriebe 15a, b, wie in Fig. 1 und 2 ersichtlich, in deren Längsrichtung gegeneinander versetzt, dergestalt, dass Stirnkanten bzw. Stirnendbereiche der Zugmitteltriebe 15a, b parallel zur Längsrichtung der ersten Fördereinrichtung 1 verlaufen. Somit ist es aber erforderlich, dass das Abschiebeelement 29 über eine erste Gelenkanordnung 36 am Mitnehmer 31a des ersten Zugmittels 23 zumindest in zwei Achsrichtungen in begrenztem Maße bewegbar und über eine zweite Gelenkanordnung 36 am Mitnehmer 31b des zweiten Zugmittels 23 zumindest in zwei Achsrichtungen in begrenztem Maße bewegbar gelagert ist.

Vorzugsweise weist die Übergabevorrichtung 12 zwei Abschiebeeinheiten 30 mit zwei in Umlaufrichtung der Zugmittel 23 im Abstand parallel zueinander und in Förderrichtung - gemäß Pfeil 3 - der Fördergüter 4 verlaufende sowie parallel zur Förderebene 18 gehaltene Abschiebeelemente 29 auf, die jeweils über die zwei Gelenkanordnungen an je einem Paar von Mitnehmern 31a, b gelenkig befestigt sind. Die zwei Paare von Mitnehmern 31a, b sind in einem dem Abstand der Abschiebeelemente 29 entsprechenden Abstand voneinander getrennt an den Zugmitteln 23 außen aufgebaut.

Der Abstand der Abschiebeelemente 29 in Umlaufrichtung der Zugmittel 23 ist zumindest geringfügig größer als eine senkrecht zur Längsrichtung der ersten Fördereinrichtung 1 bemessene maximale Breite 56 des Fördergutes 4, sodass dann, wenn das erste Abschiebeelement 29 ein Fördergut 4 gerade aus der ersten Fördereinrichtung 1 ausgeschoben hat und über den Förderweg 6 hinaus bewegt wurde, das zweite Abschiebeelement 29 in einer Ausgangsstellung, wie in strichlierte Linien in Fig. 1 eingetragen, bzw. in Bereitschaft seitlich neben dem Förderweg 6 steht. Wird der gesteuerte Antriebsmotor 11 in Gang gesetzt, bewegt sich das erste Abschiebeelement 29 im Gegenuhrzeigersinn aus seiner Ausgangsstellung in die Arbeitsstellung in den Förderweg 6, wie in vollen Linien in Fig. 1 eingetragen, in der ein Fördergut 4 abgeschoben wird. Da die Abschiebeelemente 29 bewegungsmäßig gekoppelt sind, wird auch das zweite Abschiebeelement 29 im Gegenuhrzeigersinn bewegt, sodass das links unten befindliche zweite Abschiebeelement 29 erst etwa nach einem halben Umlauf in der Ausgangsstellung positioniert ist, an einem auszuschleusenden Fördergut 4 angreift und dieses ausschiebt.

Jedes über die Zugmitteltriebe 15a, b zwischen der Ausgangsstellung und Arbeitsstellung, wie in vollen Linien in Fig. 1 eingetragen, verstellbare, insbesondere verschiebbare Abschiebeelement 29 der Übergabevorrichtung 12 erstreckt sich in Längsrichtung der ersten Fördereinrichtung 1 zwischen den im Abstand 57 parallelen Zugmitteltrieben 15a, b und ragt von unten ausgehend vom zumindest einen Förderorgan 9 im mittleren Förderabschnitt 8b bis über die Förderebene 18 hinaus. Das Fördergut 4 wird über das von unten die Förderebene 18 überragende Abschiebeelement 29 knapp oberhalb seiner unteren Kante im formstabilen Bereich ergriffen. In der Ausgangsstellung ist ein Abschiebeelement 29 seitlich neben dem Förderweg 6 positioniert, während in der Arbeitsstellung, ein Abschiebeelement 29 in den Förderweg 6 bis über den Förderweg 6 seitlich zur Fördereinrichtung 1 hinaus in einer Horizontalebene linear verstellbar ist.

Die die Übergabevorrichtung 12 aufweisenden Abschiebeelemente 29 sind identisch und jeweils durch ein Längsprofil mit L-förmigen, rundem, ovalem oder mehreckigem Querschnitt ausgebildet und an einer in Abgaberichtung - gemäß Pfeil 13 - vorderen Seitenfläche mit einer Führungsfläche 33 versehen, an der das auszuschleusende, vorzugsweise quaderförmige Fördergut 4 einseitig anliegt. Eine Länge 34 vom Abschiebeelement 29 entspricht zumindest der halben, maximalen Längenabmessung 35 des Fördergutes 4. In einer möglichen Variante, weist das Abschiebeelement 29 eine Länge 34 auf, die annähernd der maximalen Längenabmessung 35 des Fördergutes 4 entspricht. Dadurch können nun Fördergüter 4 unterschiedlicher Längenabmessung 35 über die Übergabevorrichtung 12 ausgeschleust werden.

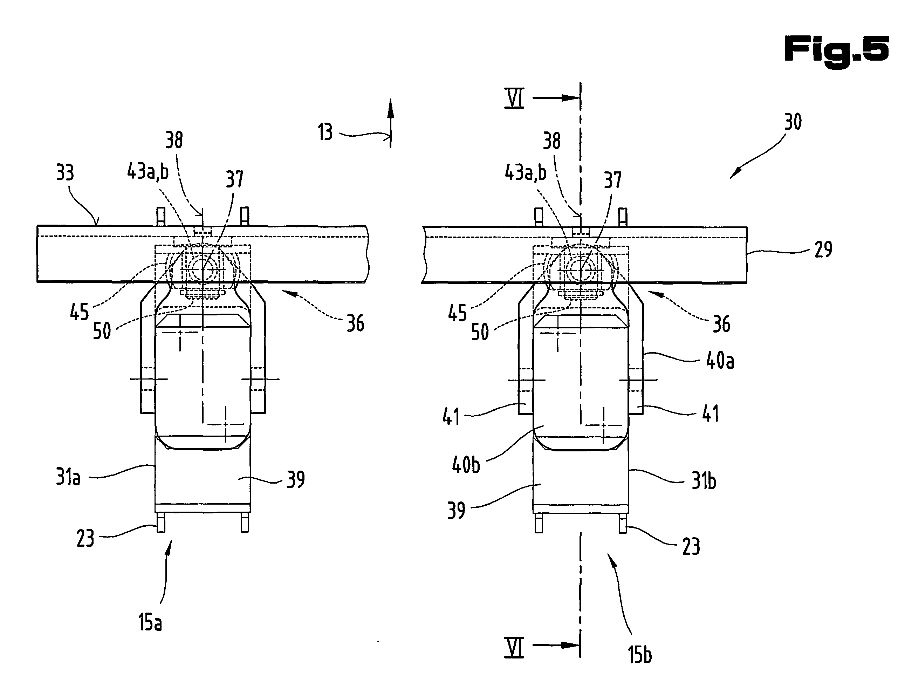

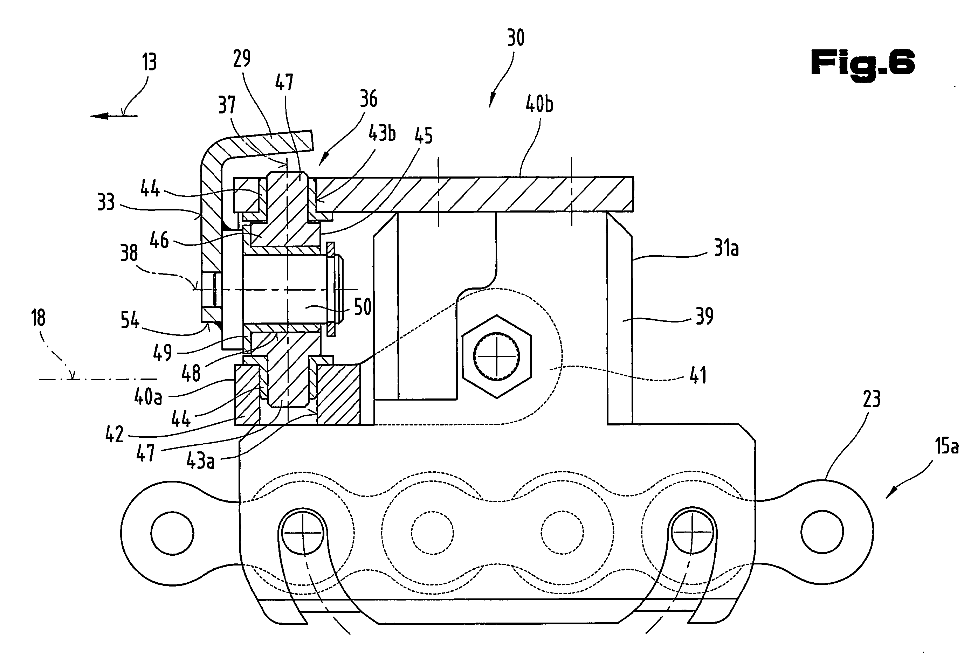

In den gemeinsam beschriebenen Fig. 5 und 6 ist ein Teilabschnitt eines Zugmitteltriebes 15a, b und ein profilartiges Abschiebeelement 29 der Abschiebeeinheit 30 in unterschiedlichen Ansichten gezeigt. Das Abschiebeelement 29 ist nach dieser Ausführung, wie bereits oben beschrieben, über zwei Gelenkanordnungen 36 ausschließlich um die vertikal zur Förderebene 18 für die Fördergüter 4 (nicht dargestellt) verlaufende, erste Achse 37 und um die in Abgaberichtung - gemäß Pfeil 13 - der Übergabevorrichtung 12 verlaufende, zweite Achse 38 begrenzt bewegbar, insbesondere verschwenkbar an den Mitnehmern 31a, b gelagert. Die Gelenkanordnungen 36 sind jeweils in Abgaberichtung - gemäß Pfeil 13 - der auszuschleusenden Fördergüter 4 betrachtet, hinter dem Abschiebeelement 29 zwischen den Mitnehmern 31 a, b und einer in Abgaberichtung - gemäß Pfeil 13 - der Fördergüter 4 betrachtet, hinteren Längsseite vom Abschiebeelement 29 angeordnet.

Jeder Mitnehmer 31 a, b umfasst einen am jeweiligen Zugmittel 23 befestigten, prismenartigen Tragkörper 39 und einen mit diesem bewegungsfest verbundenen unteren und oberen Lagerflansch 40a, b. Der untere Lagerflansch 40a ist gabelartig ausgebildet und umgreift mit seinen frei vorkragenden Laschen 41 beidseitig den Tragkörper 3 9 und bildet an seinem die Lagerflansche 40a, b verbindenden Basisteil 42 eine Lagerbohrung 43a aus. Der obere Lagerflansch 40b ist dagegen plattenartig ausgebildet und ist am Tragkörper 39 an der Oberseite befestigt sowie an seinem am Tragkörper 39 vorkragenden Ende mit einer Lagerbohrung 43b versehen. Die Lagerbohrungen 43a, b sind vertikal übereinander angeordnet und verläuft deren gemeinsame Achse 37 vertikal zur Förderebene 18. In die Lagerbohrungen 43a, b ist jeweils eine Gleitlagerbuchse 44 eingepresst.

Wie in den Figuren gezeigt, weist jede Gelenkanordnung 36 ein Ausgleichsgelenk 45 auf, das einen prismatischen Grundkörper 46, zwei an diesem seitlich vorstehende, achsparallele Lagerzapfen 47 sowie eine den Grundkörper 46 durchragende Lagerbohrung 48 aufweist. Die Achse 38 der Lagerbohrung 48 verläuft parallel zur Abgaberichtung - gemäß Pfeil 13 - des auszuschleusenden Fördergutes 4. Das Ausgleichsgelenk 45 ist mittels den Lagerzapfen 47 um die Achse 37 begrenzt verschwenkbar am Mitnehmer 31a, b, insbesondere den Lagerflanschen 40a, b gelagert. In die Lagerbohrung 48 ist wiederum eine Gleitlagerbuchse 49 eingesetzt. Das Abschiebeelement 29 ist seinerseits mittels den an diesem befestigten Lagerzapfen 50 um die in Abgaberichtung - gemäß Pfeil 13 - der auszuschleusenden Fördergüter 4 verlaufende, zweite Achse 38 begrenzt verschwenkbar am Mitnehmer 31a, b, insbesondere am Ausgleichsgelenk 45, gelagert. Dabei sind die Lagerzapfen 50 am Abschiebeelement 29 in die Lagerbohrungen 48 der Ausgleichsgelenke 45 eingesetzt und in axialer Richtung, beispielsweise über einen Sicherungsring positioniert gehalten. Die Lagerzapfen 50 sind im Bereich der in Bezug auf die Abgaberichtung - gemäß Pfeil 13 - hinteren Längsseite am Abschiebeelement 29 befestigt, beispielsweise angeschweißt.

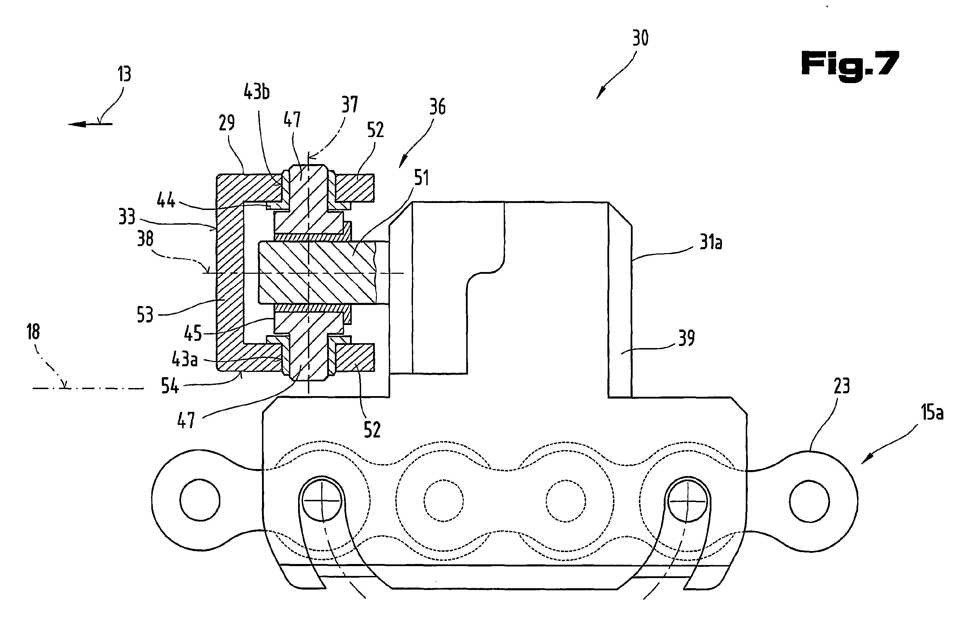

In der Fig. 7 ist die Abschiebeeinheit 30 mit einer weiteren Ausführung der Gelenkanordnung 36 gezeigt. Diese Abschiebeeinheit 30 weist die Mitnehmer 31a, b, das Abschiebeelement 29 und die Gelenkanordnungen 36 auf Jede Gelenkanordnung 36 umfasst wiederum ein Ausgleichsgelenk 45. Am Tragkörper 39 jedes Mitnehmers 31a, b ist ein in Abgaberichtung - gemäß Pfeil 13 -verlaufender Lagerzapfen 51 angeordnet, der die zweite Achse 38 ausbildet, auf der das Ausgleichsgelenk 45 um die zweite Achse 38 verschwenkbar am Mitnehmer 31a, b gelagert ist. In dieser Ausführung ist das Abschiebeelement 29 im Querschnitt C-förmig ausgebildet und an seinen frei vorkragenden Schenkeln 52 jeweils mit einer vertikal zur Förderebene 18 ausgerichteten Lagerbohrung 43a, b versehen, in welche die Gleitlagerbuchsen 44 eingepresst sind und Lagerzapfen 47 vom Ausgleichsgelenk 45 vorragen. Die Lagerbohrungen 43a, b sind vertikal übereinander angeordnet und verläuft deren gemeinsame Achse 37 vertikal zur Förderebene 18 bzw. ist radial zum Lagerzapfen 51 ausgerichtet. Eine die Schenkeln 52 verbindende Basis 53 des Abschiebeelementes 29 bildet an deren in Abgaberichtung - gemäß Pfeil 13 - vorderen Längsseite, die Führungsfläche 33 für das auszuschleusende Fördergut 4 aus. Daher ist auch nach dieser Ausführung das Abschiebeelement 29 über die zwei Gelenkanordnungen 36 ausschließlich um die vertikal zur Förderebene 18 für die Fördergüter 4 (nicht dargestellt) verlaufende, erste Achse 37 und um die in Abgaberichtung - gemäß Pfeil 13 - der Übergabevorrichtung 12 verlaufende, zweite Achse 38 begrenzt bewegbar, insbesondere verschwenkbar an den Mitnehmern 31a, b gelagert.

Eine andere, nicht gezeigte Ausführung der Gelenkanordnung 36 weist ein Ausgleichsgelenk auf, das durch ein zwischen zwei parallelen Stützplatten vorgesehenes elastisches Federelement aus Gummi, Kunststoff (Elastomere), Metall und dgl., insbesondere ein Gummifederelement, bzw. eine Gummimetallfeder, wie beispielsweise Schub-Scheibenfeder, gebildet ist. Somit ist das Abschiebeelement 29 über die Gelenkanordnungen 36 an den Mitnehmern 31a, b schwimmend aufgehängt, wobei jeweils eine Stützplatte mit dem Mitnehmer 31a, b und die andere Stützplatte mit dem Abschiebeelement 29 bewegungsfest verbunden ist. Durch Wahl des Elastizitätsmoduls vom Federelement kann die Beweglichkeit des Abschiebeelementes 29 derart abgestimmt werden, dass die Stützplatten in begrenztem Maße in ihren parallelen Ebenen gegeneinander verschoben werden können und das Abschiebeelement 29 im Wesentlichen stets parallel zur Längsrichtung der Fördereinrichtung 1 als auch parallel zur Förderebene 18 gehalten wird sowie mit der Förderebene 18 einen Winkel von annähernd 90° einschließt. Nach dieser Ausführung ist das Abschiebeelement 29 über die Gelenkanordnungen 36 zumindest um die vertikal zur Förderebene 18 für die Fördergüter 4 (nicht dargestellt) verlaufende erste Achse 37 und um die in Abgaberichtung - gemäß Pfeil 13 - verlaufende zweite Achse 38 begrenzt bewegbar an den Mitnehmern 31 a, b gelagert.

Die oben beschriebenen Gelenkanordnungen 36 dienen dem geforderten Winkelausgleich des Abschiebeelementes 29 gegenüber den in Abgaberichtung - gemäß Pfeil 13 - versetzten, Platz sparend angeordneten Zugmitteltrieben 17a, b (wie oben beschrieben), während der Umlenkung des mit den Zugmitteln 23 bewegungsmäßig gekoppelten Abschiebeelementes 29 an den Umlenkungen 22, Antriebs- und Umlenkrad 20a,b, 21a, b, sodass das Abschiebeelement 29 stets parallel zur Längsrichtung der Fördereinrichtung 1 als auch parallel zur Förderebene 18 gehalten wird und frei von mechanischen Belastungen bleibt. Außerdem wird mittels den Gelenkanordnungen 36 eine Veränderung des vertikalen Abstandes zwischen der Unterkante 54 des Abschiebeelementes 29 und der Förderebene 18 ausgeschlossen.

Abschließend sei noch darauf hingewiesen, dass im Sinne der Erfindung auch die Möglichkeit besteht, dass die erste Fördereinrichtung 1 in den entsprechenden Förderabschnitten 8a, b, c ein endlos umlaufendes Förderband als Förderorgan 9 oder mehrere Förderorgane 9 aufweist, wobei letztere durch zumindest zwei parallel zueinander und voneinander beabstandete sowie in Förderrichtung - gemäß Pfeil 3 - verlaufende Zugmittelstränge, wie Riemen, Kette und dgl. gebildet ist. Dabei bildet das obere Trum des Förderbandes oder der Zugmittelstränge die Förderebene 18 für die auf diesen abgestützten Fördergüter 4 aus. Die flexiblen Zugmittel 23 der Zugmitteltriebe 15a, b sind durch einen Zahnriemen, eine Kette und dgl. gebildet. Es besteht die Möglichkeit, dass die Gelenkanordnung 36 durch ein Kugelgelenk gebildet ist, das zwischen dem Mitnehmer 31 a, b und dem Abschiebeelement 29 angeordnet ist und bei dem eine Relativbewegung des Abschiebeelementes 29 zur Förderebene 18 in senkrechter Richtung unterbunden ist. In einer bevorzugten Variante werden nur zwei Zugmittetriebe 15a, b eingesetzt, zwischen denen das Abschiebeelement 29 in oben beschriebener Weise angeordnet ist. Grundsätzlich besteht auch die Möglichkeit, wie dies jedoch nicht dargestellt ist, dass mehr als zwei, beispielsweise drei, vier, Zugmittetriebe 15a-n eingesetzt werden, wobei sich dann das Abschiebeelement 29 zwischen den beiden äußeren Zugmitteltrieben parallel zur Längsrichtung der ersten Fördereinrichtung 1 durchgehend erstreckt und jeweils eine Gelenkanordnung 36 zwischen dem Abschiebeelement 29 und dem entsprechenden Zugmittetrieb 15a-n vorgesehen ist.

Das beschriebene Abschiebeelement 29 kann in einer anderen, nicht gezeigten Ausführung auch durch ein Kammprofil gebildet werden, dessen Zinken nach unten zu den Zugmitteln 23 gerichtet sind und eine Unterkante 54 vom Abschiebeelement 29 unterhalb der Förderebene 18 verläuft.

Der Ordnung halber sei abschließend darauf hingewiesen, dass zum besseren Verständnis des Aufbaus der Fördereinrichtung 1 und Übergabevorrichtung 12 diese bzw. deren Bestandteile teilweise unmaßstäblich und/oder vergrößert und/oder verkleinert dargestellt wurden.

### Bezugszeichenaufstellung

- 1: Fördereinrichtung
- 2: Rahmen
- 3: Pfeil
- 4: Fördergut
- 5: Rahmenprofil

- 6: Förderweg
- 7: Breite
- 8a: Förderabschnitt
- 8b: Förderabschnitt
- 8c: Förderabschnitt

- 9: Förderorgan
- 10a: Zugmittel
- 10b: Zugmittel
- 11: Antriebsmotor
- 12: Übergabevorrichtung

- 13: Pfeil
- 14: Fördereinrichtung
- 15a: Zugmitteltrieb
- 15h: Zugmitteltrieb
- 16: Winkel

- 17: Abstandsspalt
- 18: Förderebene
- 19a: Traggestell
- 19b: Traggestell

- 20a: Antriebsrad
- 20b: Antriebsrad
- 21a: Umlenkrad
- 21b: Umlenkrad
- 22: Umlenkung

- 23: Zugmittel
- 24a: Antriebsmittel
- 24b: Antriebsmittel
- 25a: Antriebswelle
- 25b: Antriebswelle

- 26: Antriebsstrang
- 27: Rad
- 28: Rad
- 29: Abschiebeelement
- 30: Abschiebeeinheit

- 31 a: Mitnehmer
- 31 b: Mitnehmer
- 32:
- 33: Führungsfläche
- 34: Länge

- 35: Längenabmessung
- 36: Gelenkanordnung
- 37: Achse
- 38: Achse
- 39: Tragkörper

- 40a: Lagerflansch
- 40b: Lagerflansch
- 41: Lasche
- 42: Basisteil
- 43a: Lagerbohrung

- 43b: Lagerbohrung
- 44: Gleitlagerbuchse
- 45: Ausgleichsgelenk
- 46: Grundkörper
- 47: Lagerzapfen

- 48: Lagerbohrung
- 49: Gleitlagerbuchse
- 50: Lagerzapfen
- 51: Lagerzapfen
- 52: Schenkel

- 53: Basis
- 54: Unterkante
- 55: Übertriebsrad
- 56: Breite
- 57: Abstand

## Patentansprüche

1. Übergabevorrichtung (12) zum seitlichen Ausschleusen von einreihig auf einer ersten Fördereinrichtung (1) antransportierten Fördergütern (4) auf eine der Übergabevorrichtung (12) in Abgaberichtung (13) der Fördergüter (4) nachgeordnete, weitere Fördereinrichtung (14), mit wenigstens einer Abschiebeeinheit (30) und mindestens zwei sich schräg zur Längsrichtung der ersten Fördereinrichtung (1) im Abstand mit gleicher Länge parallel erstreckenden und synchron antreibbaren Zugmitteltrieben (15a, b), die je ein endlos umlaufendes Zugmittel (23) umfassen und die Abschiebeeinheit (30) an den Zugmitteln (23) befestigte Mitnehmer (31a, b) und wenigstens ein aus einer Ausgangsstellung seitlich neben dem Förderweg (6) der Fördergüter (4) in eine Arbeitsstellung in den Förderweg (6) der Fördergüter (4) verstellbares Abschiebeelement (29) zum Ausschleusen eines Fördergutes (4) aufweist, **dadurch gekennzeichnet, dass** die Zugmitteltriebe (15a, b) unterhalb einer von der Fördereinrichtung (1) ausgebildeten, horizontalen Förderebene (18) und in deren Längsrichtung gegeneinander versetzt angeordnet sind sowie die in einer zur Förderrichtung (3) der Fördergüter (4) entlang der ersten Fördereinrichtung (1) parallel verlaufenden Ebene paarweise gegenüberliegend an den Zugmitteln (23) befestigte Mitnehmer (31a, b) aufweisen, wobei stirnseitige Endbereiche der Zugmitteltriebe (15a, b) parallel zur Längsrichtung der ersten Fördereinrichtung (1) verlaufen und dass sich das Abschiebeelement (29) zwischen den Mitnehmern (31a, b) durchgehend erstreckt und stets im Wesentlichen parallel zur Förderrichtung (3) der Fördergüter (4) gehalten sowie über jeweils eine Gelenkanordnung (36) um die vertikal zur Förderebene (18) der Fördergüter (4) verlaufende, erste Achse (37) und parallel zur Abgaberichtung (13) der Übergabevorrichtung (12) verlaufende, zweite Achse (38) bewegbar, insbesondere verschwenkbar an jedem Mitnehmer (31a, b) des ersten und zweiten Zugmittels (23) gelagert ist.

2. Übergabevorrichtung nach Anspruch 1, **dadurch gekennzeichnet, dass** das Abschiebeelement (29) eine Länge (34) aufweist, die zumindest der halben, maximalen Längenabmessung (35) des abzuschiebenden Fördergutes (4) entspricht.

3. Übergabevorrichtung nach Anspruch 1, **dadurch gekennzeichnet, dass** sich die Zugmitteltriebe (15a, b) über die gesamte Breite der ersten Fördereinrichtung (1) erstrecken.

4. Übergabevorrichtung nach Anspruch 1, **dadurch gekennzeichnet, dass** sich die Zugmitteltriebe (15a, b) nur über eine Teilbreite der ersten Fördereinrichtung (1) erstrecken.

5. Übergabevorrichtung nach Anspruch 1, **dadurch gekennzeichnet, dass** das Abschiebeelement (29) durch ein linealartiges Längsprofil gebildet ist und sich zwischen den Mitnehmern (31a, b) bzw. Zugmitteltrieben (15a, b) mit geringem Abstand oberhalb der Förderebene (18) durchgehend erstreckt.

6. Übergabevorrichtung nach Anspruch 1, **dadurch gekennzeichnet, dass** das Abschiebeelement (29) durch ein Kammprofil gebildet ist, dessen Zinken nach unten zu den Zugmitteln (23) gerichtet sind und zwischen benachbarten Förderorganen (9) in einem Förderabschnitt (8b) der ersten Fördereinrichtung (1) eintauchen und eine Unterkante (54) unterhalb der Förderebene (18) verläuft.

7. Übergabevorrichtung nach Anspruch 1, **dadurch gekennzeichnet, dass** die parallelen Zugmitteltriebe (15a, b) unter einem Winkel (16) zur Längserstreckung der ersten Fördereinrichtung (1) in Richtung des aus dem Geschwindigkeitsvektor eines mittleren Förderabschnittes (8b) der ersten Fördereinrichtung (1) und dem zu diesem quergerichteten Übergabegeschwindigkeitsvektor resultierenden Geschwindigkeitsvektors verlaufen.

8. Übergabevorrichtung nach Anspruch 1, **dadurch gekennzeichnet, dass** eine Länge der Zugmitteltriebe (15a, b) größer ist als die Breite (7) des Förderweges (6) und die Zugmitteltriebe (15a, b) den Förderweg (6) beidseitig seitlich überragen.

9. Übergabevorrichtung nach Anspruch 1, **dadurch gekennzeichnet, dass** eine Länge der Zugmitteltriebe (15a, b) annähernd der Breite (7) des Förderweges (6) entspricht und die Zugmitteltriebe (15a, b) zwischen Rahmenprofilen (5) der ersten Fördereinrichtung (1) angeordnet sind.

10. Übergabevorrichtung nach Anspruch 1, **dadurch gekennzeichnet, dass** die Zugmitteltriebe (15a, b) mit gleicher Länge in deren Längsrichtung gegeneinander versetzt angeordnet sind und mit ihren gegenüberliegenden Stirnenden seitlich an in Förderrichtung (3) der Fördergüter (4) im Abstand parallel verlaufenden Rahmenprofilen (5) der ersten Fördereinrichtung (1) vorragen sowie deren Stirnkanten parallel zur Längsrichtung der ersten Fördereinrichtung (1) verlaufen.

11. Übergabevorrichtung nach Anspruch 1, **dadurch gekennzeichnet, dass** die Zugmitteltriebe (15a, b) mit gleicher Länge in deren Längsrichtung gegeneinander versetzt sowie zwischen den in Förderrichtung (3) der Fördergüter (4) im Abstand parallel verlaufenden Rahmenprofilen (5) der ersten Fördereinrichtung (1) angeordnet sind und deren Stirnkanten parallel zur Längsrichtung der ersten Fördereinrichtung (1) verlaufen.

12. Übergabevorrichtung nach Anspruch 1, **dadurch gekennzeichnet, dass** die Zugmitteltriebe (15a, b) jeweils ein Antriebsrad (20a, b), wenigstens ein Umlenkrad (21a, b) und/oder Umlenkungen (22) und das um das Antriebs- und Umlenkrad (20a, b, 21a, b) und/oder Umlenkungen (22) geführte Zugmittel (23) aufweisen und dass die Zugmittel (23) der Zugmitteltriebe (15a, b) synchronisiert angetrieben sind.

13. Übergabevorrichtung nach Anspruch 1, **dadurch gekennzeichnet, dass** das Abschiebeelement (29) an seiner in Abgaberichtung (13) der auszuschleusenden Fördergüter (4) betrachtet vorderen Längsseite eine vorzugsweise ebene Führungsfläche (33) für das auszuschleusende Fördergut (4) ausbildet, wobei die Führungsfläche (33) und die Förderebene (18) einen annähernd rechten Winkel einschließen.

14. Übergabevorrichtung nach Anspruch 1, **dadurch gekennzeichnet, dass** das jede Gelenkanordnung (36) in Abgaberichtung (13) der Fördergüter (4) betrachtet hinter dem Abschiebeelement (29) angeordnet und zwischen dem betreffenden Mitnehmer (31a, b) und einer in Abgaberichtung (13) der Fördergüter (4) betrachtet hinteren Längsseite vom Abschiebeelement (29) vorgesehen ist.

15. Übergabevorrichtung nach Anspruch 1 oder 14, **dadurch gekennzeichnet, dass** jede Gelenkanordnung (36) ein Ausgleichsgelenk (45) aufweist, wobei das Ausgleichsgelenk (45) um die in Abgaberichtung (13) der Fördergüter (4) der Übergabevorrichtung (12) verlaufende, zweite Achse (38) bewegbar, insbesondere verschwenkbar am betreffenden Mitnehmer (31a, b) gelagert ist und das Abschiebeelement (29) um die zur zweiten Achse (3 8) radial ausgerichtete, erste Achse (37) bewegbar, insbesondere verschwenkbar am Ausgleichsgelenk (45) gelagert ist.

16. Übergabevorrichtung nach Anspruch 1, **dadurch gekennzeichnet, dass** jede Gelenkanordnung (36) ein Ausgleichsgelenk (45) aufweist, das durch ein zwischen zwei Stützplatten vorgesehenes Federelement, insbesondere ein Gummifederelement, gebildet ist, wobei eine Stützplatte mit dem betreffenden Mitnehmer (31a, b) und die andere Stützplatte mit dem Abschiebeelement (29) bewegungsfest verbunden ist.

17. Übergabevorrichtung nach Anspruch 1, **dadurch gekennzeichnet, dass** eine zweite Abschiebeeinheit (30) vorgesehen ist, die ein aus einer Ausgangsstellung seitlich neben dem Förderweg (6) der Fördergüter (4) in eine Arbeitsstellung in den Förderweg (6) der Fördergüter (4) verstellbares, weiteres Abschiebeelement (29) zum Ausschleusen eines Fördergutes (4) umfasst und dass die Zugmitteltriebe (15a, b) in Abgaberichtung (13) in einem Abstand hintereinander und in einer zur Förderrichtung (3) der Fördergüter (4) entlang der ersten Fördereinrichtung (1) parallel verlaufenden Ebene paarweise gegenüberliegend an den Zugmitteln (23) befestigte Mitnehmer (31a, b) aufweisen, wobei das weitere Abschiebeelement (29) sich zwischen den weiteren Mitnehmern (31a, b) durchgehend erstreckt und stets im Wesentlichen parallel zur Förderrichtung (3) der Fördergüter (4) verläuft sowie über jeweils eine Gelenkanordnung (36) um die vertikal zur Förderebene (18) der Fördergüter (4) verlaufende, erste Achse (37) und parallel zur Abgaberichtung (13) der Übergabevorrichtung (12) verlaufende, zweite Achse (38) bewegbar, insbesondere verschwenkbar an jedem weiteren Mitnehmer (31a, b) des ersten und zweiten Zugmittels (23) gelagert ist.

18. Übergabevorrichtung nach Anspruch 17, **dadurch gekennzeichnet, dass** ein Abstand zwischen den Abschiebeelementen (29) größer ist als eine senkrecht zur Längsrichtung der ersten Fördereinrichtung (1) bemessene; maximale Breite (56) des Fördergutes (4).

19. Übergabevorrichtung nach Anspruch 17, **dadurch gekennzeichnet, dass** das weitere Abschiebeelement (29) durch ein linealartiges Längsprofil gebildet ist und sich zwischen den weiteren Mitnehmern (31a, b) bzw. Zugmitteltrieben (15a, b) mit geringem Abstand oberhalb der Förderebene (18) durchgehend erstreckt.

20. Übergabevorrichtung nach Anspruch 17, **dadurch gekennzeichnet, dass** das weitere Abschiebeelement (29) durch ein Kammprofil gebildet ist, dessen Zinken nach unten zu den Zugmitteln (23) gerichtet sind und zwischen benachbarten Förderorganen (9) in einem Förderabschnitt (8b) der ersten Fördereinrichtung (1) eintauchen und eine Unterkante (54) unterhalb der Förderebene (18) verläuft.

21. Übergabevorrichtung nach Anspruch 17, **dadurch gekennzeichnet, dass** das weitere Abschiebeelement (29) eine Länge (34) aufweist, die zumindest der halben, maximalen Längenabmessung (35) des abzuschiebenden Fördergutes (4) entspricht.

22. Fördereinrichtung (1) für den Transport von Fördergütern (4) entlang eines Förderweges (6), der in wenigstens drei Förderabschnitte (8a, b, c) unterteilt ist und jeder Förderabschnitt (8a, b, c) wenigstens ein Förderorgan (9) aufweist, mit einer Übergabevorrichtung (12) im mittleren Förderabschnitt (8b) für den bedarfsweisen Transport von einreihig auf dem ersten Förderabschnitt (8a) antransportierten Fördergütern (4) auf eine der Übergabevorrichtung (12) in Abgaberichtung (13) der Fördergüter (4) nachgeordnete, weitere Fördereinrichtung (14), welche Übergabevorrichtung (12) mindestens zwei sich schräg zur Längsrichtung der ersten Fördereinrichtung (1) im Abstand parallel erstreckende Zugmitteltriebe (15a, b) umfasst, **dadurch gekennzeichnet, dass** zwischen einander zugewandten Stirnenden der in Förderrichtung (3) der Fördergüter (4) aufeinander folgenden Förderabschnitte (8a, b, c) jeweils ein sich parallel zu den Zugmitteltrieben (15a, b) zumindest über die gesamte Breite (7) des Förderweges (6) oder über einen Teil der Breite (7) des Förderweges (6) erstreckender Abstandsspalt (17) ausgebildet ist und jeder Abstandsspalt (17) von jedem unterhalb der horizontalen Förderebene (18) der Förderabschnitte (8a, b, c) angeordneten Zugmitteltrieb (15a, b) der Übergabevorrichtung (12) durchsetzt ist und dass die Übergabevorrichtung (12) nach einem der Ansprüche 1 bis 21 ausgebildet ist.

## Claims

1. Transfer mechanism (12) for pushing conveyed objects (4) out to the side from a single row conveyed on a first conveyor system (1) onto another conveyor system (14) disposed downstream of the transfer mechanism (12) in the transfer direction (13) of the conveyed objects (4), with at least one pushing unit (30) and at least two parallel flexible drives (15a, b) of equal length at a distance apart extending at an angle with respect to the longitudinal direction of the first conveyor system (1) and which can be driven synchronously, each comprising an endlessly circulating traction means (23), and the pushing unit (30) has drivers (31a, b) mounted on the traction means (23) and at least one pushing element (29) which can be displaced from an initial position at the side, adjacent to the conveyor path (6) of the conveyed objects (4), into an operating position in the conveyor path (6) of the conveyed objects (4) for pushing a conveyed object (4), wherein the flexible drives (15a, b) are disposed underneath a horizontal conveyor plane (18) formed by the conveyor system (1) and offset from one another in their longitudinal direction, and have drivers (31a, b) mounted on the traction means (23) lying opposite one another in pairs in a plane extending parallel with the conveying direction (3) of the conveyed objects (4) along the first conveyor system (1), and terminal end regions of the flexible drives (15a, b) extend parallel with the longitudinal direction of the first conveyor system (1), and the pushing element (29) extends continuously between the drivers (31a, b) and is held so that it is always essentially parallel with the conveying direction (3) of the conveyed objects (4), and is mounted so that it is able to move, in particular can be pivoted, by means of a respective articulated arrangement (36) about the first axis (37) extending perpendicular to the conveyor plane (18) of the conveyed objects (4) and about the second axis (38) extending parallel with the transfer direction (13) of the transfer mechanism (12) on each driver (31a, b) of the first and second traction means (23).

2. Transfer mechanism according to claim 1, wherein the pushing element (29) is of a length (34) which corresponds to at least half the maximum length dimension (35) of the conveyed object (4) to be pushed.

3. Transfer mechanism according to claim 1, wherein the flexible drives (15a, b) extend across the entire width of the first conveyor system (1).

4. Transfer mechanism according to claim 1, wherein the flexible drives (15a, b) extend across only a part-width of the first conveyor system (1).

5. Transfer mechanism according to claim 1, wherein the pushing element (29) is provided in the form of a rule-type elongate section and extends continuously between the drivers (31a, b) and flexible drives (15a, b) at a slight distance above the conveyor plane (18).

6. Transfer mechanism according to claim 1, wherein the pushing element (29) is provided in the form of a comb profile, the tines of which are directed downwards towards the traction means (23) and dip down between adjacent conveyor elements (9) in a conveyor section (8b) of the first conveyor system (1), and a bottom edge (54) extends underneath the conveyor plane (18).

7. Transfer mechanism according to claim 1, wherein the parallel flexible drives (15a, b) extend at an angle (16) with respect to the longitudinal extension of the first conveyor system (1) in the direction of the speed vector resulting from the speed vector of a middle conveyor section (8b) of the first conveyor system (1) and the transfer speed vector oriented transversely to it.

8. Transfer mechanism according to claim 1, wherein a length of the flexible drives (15a, b) is bigger than the width (7) of the conveyor path (6) and the flexible drives (15a, b) extend laterally on both sides beyond the conveyor path (6).

9. Transfer mechanism according to claim 1, wherein a length of the flexible drives (15a, b) approximately corresponds to the width (7) of the conveyor path (6) and the flexible drives (15a, b) are disposed between frame sections (5) of the first conveyor system (1).

10. Transfer mechanism according to claim 1, wherein the flexible drives (15a, b) are of equal length and are disposed offset from one another in their longitudinal direction, and project laterally with their oppositely lying terminal ends on frame sections (5) of the first conveyor system (1) in the conveying direction (3) of the conveyed objects (4) extending parallel at a distance apart and their terminal edges extend parallel with the longitudinal direction of the first conveyor system (1).

11. Transfer mechanism according to claim 1, wherein the flexible drives (15a, b) are of equal length and offset from one another in their longitudinal direction and are disposed between the frame sections (5) of the first conveyor system (1) extending in the conveying direction (3) of the conveyed objects (4) extending parallel at a distance apart, and their terminal edges extend parallel with the longitudinal direction of the first conveyor system (1).

12. Transfer mechanism according to claim 1, wherein the flexible drives (15a, b) each have a driving pulley (20a, b), at least one guide pulley (21a, b) and/or deflections (22) and the traction means (23) guided around the drive and guide pulley (20a, b, 21a, b) and/or deflections (22), and the traction means (23) of the flexible drives (15a, b) are driven in synchronization.

13. Transfer mechanism according to claim 1, wherein the pushing element (29) forms a preferably flat guide surface (33) for the conveyed object (4) to be pushed on its front longitudinal face as viewed in the transfer direction (13) of the conveyed objects (4) to be pushed, and the guide surface (33) and conveyor plane (18) more or less subtend a right angle.

14. Transfer mechanism according to claim 1, wherein the pushing element (29) is provided behind every articulated arrangement (36) as viewed in the transfer direction (13) of the conveyed objects (4), disposed between the relevant driver (31a, b) and a rear longitudinal face of the pushing element (29) as viewed in the transfer direction (13) of the conveyed objects (4).

15. Transfer mechanism according to claim 1 or 14, wherein every articulated arrangement (36) has a compensating joint (45) and the compensating joint (45) is mounted so that it is able to move, in particular pivot on the relevant driver (31a, b), about the second axis (38) extending in the transfer direction (13) of the conveyed objects (4) of the transfer mechanism (12), and the pushing element (29) is mounted so that it can be moved, in particular pivoted, on the compensating joint (45) about the first axis (37) oriented radially with respect to the second axis (38).

16. Transfer mechanism according to claim 1, wherein every articulated arrangement (36) has a compensating joint (45), which is provided in the form of a spring element, in particular a rubber spring element, disposed between two support plates, in which case one support plate is connected to the relevant driver (31a, b) so as to move in unison with it and the other support plate is connected to the pushing element (29) so as to move in unison with it.

17. Transfer mechanism according to claim 1, wherein a second pushing unit (30) is provided, which comprises another pushing element (29) for pushing a conveyed object (4) which can be moved from an initial position at the side, adjacent to the conveyor path (6) of the conveyed objects (4), into an operating position in the conveyor path (6) of the conveyed objects (4), and the flexible drives (15a, b) have drivers (31a, b) mounted on the traction means (23) lying opposite one another in pairs one after the other at a distance apart in the transfer direction (13) and in a plane extending parallel with the conveying direction (3) of the conveyed objects (4) along the first conveyor system (1), and the other pushing element (29) extends continuously between the other drivers (31a, b) and always extends essentially parallel with the conveying direction (3) of the conveyed objects (4) and is mounted so that it can be moved, in particular pivoted on every other driver (31a, b) of the first and second traction means (23) by means of a respective articulated arrangement (36) about the first axis (37) extending perpendicular to the conveyor plane (18) of the conveyed objects (4) and about the second axis (38) extending parallel with the transfer direction (13) of the transfer mechanism (12).

18. Transfer mechanism according to claim 17, wherein a distance between the pushing elements (29) is bigger than a maximum width (56) of the conveyed object (4) as measured perpendicular to the longitudinal direction of the first conveyor system (1).

19. Transfer mechanism according to claim 17, wherein the other pushing element (29) is provided in the form of a rule-type elongate section and extends continuously between the other drivers (31a, b) and flexible drives (15a, b) at a slight distance above the conveyor plane (18).

20. Transfer mechanism according to claim 17, wherein the other pushing element (29) is provided in the form of a comb profile, the tines of which are directed downwards towards the traction means (23) and dip down between adjacent conveyor elements (9) in a conveyor section (8b) of the first conveyor system (1), and a bottom edge (54) extends underneath the conveyor plane (18).

21. Transfer mechanism according to claim 17, wherein the other pushing element (29) is of a length (34) which corresponds to at least half the maximum length dimension (35) of the conveyed object (4) to be pushed.

22. Conveyor system (1) for conveying objects (4) along a conveyor path (6) which is sub-divided into at least three conveyor sections (8a, b, c), and every conveyor section (8a, b, c) has at least one conveyor element (9), with a transfer mechanism (12) in the middle conveyor section (8b) for conveying objects (4) as and when necessary from a single row on the first conveyor section (8a) onto another conveyor system (14) disposed downstream of the transfer mechanism (12) in the transfer direction (13) of the conveyed objects (4), which transfer mechanism (12) has at least two parallel flexible drives (15a, 15b) at a distance apart extending at an angle with respect to the longitudinal direction of the first conveyor system (1), wherein a spacing gap (17) is formed between mutually facing terminal ends of the consecutive conveyor sections (8a, b, c) in the conveying direction (3) of the conveyed objects (4) and respectively extends parallel with the flexible drives (15a, b) at least across the entire width (7) of the conveyor path (6) or across a part of the width (7) of the conveyor path (6), and each flexible drive (15a, b) of the transfer mechanism (12) disposed underneath the horizontal conveyor plane (18) of the conveyor sections (8a, b, c) extends through each spacing gap (17) and the transfer mechanism (12) is of the type according to one of claims 1 to 21.

## Revendications

1. Dispositif de transfert (12) pour expulsion latérale de marchandises (4) transportées en une rangée sur une première installation de transport (1) sur une autre installation de transport (14) disposée en aval du dispositif de transfert (12) dans la direction d'émission (13) des marchandises (4), avec au moins une unité de poussée (30) et au moins deux commandes de moyen de traction de même longueur s'étendant parallèlement en biais à la direction longitudinale de la première installation de transport (1) à une distance, et pouvant être entraînées d'une manière synchrone (15a, b), qui comprennent chacune un moyen de traction sans fin (23) s'étendant tout autour, et l'unité de poussée (30) présente des organes d'entraînement (31a, b) fixés aux moyens de traction (23) et au moins un élément de poussée (29) déplaçable d'une position initiale latéralement à côté du chemin de transport (6) des marchandises (4) dans une position de travail dans le chemin de transport (6) des marchandises (4) pour l'expulsion d'une marchandise (4), **caractérisé en ce que** les commandes de moyen de traction (15a, b) sont disposées en dessous d'un plan de transport horizontal (18) réalisé par l'installation de transport (1) et dans leur direction longitudinale d'une manière décalée l'une de l'autre, ainsi que les organes d'entraînement (31a, b) fixés dans un plan s'étendant parallèlement à la direction de transport (3) des marchandises (4) le long de la première installation de transport (1), opposés par paires aux moyens de traction (23), où des zones d'extrémité frontales des commandes de moyen de traction (15a, b) s'étendent parallèlement à la direction longitudinale de la première installation de transport (1), et **en ce que** l'élément de poussée (29) s'étend d'une manière continue entre les organes d'entraînement (31a, b) et est retenu toujours d'une manière sensiblement parallèle à la direction de transport (3) des marchandises (4) et est logé par respectivement un agencement d'articulation (36) d'une manière déplaçable autour du premier axe (37) s'étendant verticalement au plan de transport (18) des marchandises (4) et du deuxième axe s'étendant parallèlement à la direction d'émission (13) du dispositif de transfert (12), en particulier d'une manière pivotante à chaque organe d'entraînement (31a, b) du premier et du deuxième moyen de traction (23).

2. Dispositif de transfert selon la revendication 1, **caractérisé en ce que** l'élément de poussée (29) présente une longueur (34) qui correspond au moins à la moitié de la dimension longitudinale maximale (35) de la marchandise à pousser (4).

3. Dispositif de transfert selon la revendication 1, **caractérisé en ce que** les commandes de moyens de traction (15a, b) s'étendent sur toute la largeur de la première installation de transport (1).

4. Dispositif de transfert selon la revendication 1, **caractérisé en ce que** les commandes de moyens de traction (15a, b) s'étendent seulement sur une largeur partielle de la première installation de transport (1).

5. Dispositif de transfert selon la revendication 1, **caractérisé en ce que** l'élément de poussée (29) est formé par un profilé longitudinal semblable à une règle et s'étend d'une manière continue entre les organes d'entraînement (31a, b) respectivement commandes de moyens de traction (15a, b) à une petite distance au-dessus du plan de transport (18).

6. Dispositif de transfert selon la revendication 1, **caractérisé en ce que** l'élément de poussée (29) est formé par un profilé de peigne dont les dents sont orientées vers le bas vers les moyens de traction (23) et plongent entre des organes de transport avoisinants (9) dans une section de transport (8b) de la première installation de transport (1), et qu'une arête inférieure (54) s'étend en dessous du plan de transport (18).

7. Dispositif de transfert selon la revendication 1, **caractérisé en ce que** les commandes de moyens de traction parallèles (15a, b) s'étendent selon un angle (16) à l'extension longitudinale de la première installation de transport (1) dans la direction du vecteur de vitesse résultant du vecteur de vitesse d'une section de transport médiane (8b) de la première installation de transport (1) et du vecteur de vitesse de transfert orienté transversalement à celui-ci.

8. Dispositif de transfert selon la revendication 1, **caractérisé en ce qu'**une longueur des commandes de moyens de traction (15a, b) est plus grande que la largeur (7) du chemin de transport (6) et que les commandes de moyens de traction (15a, b) font saillie latéralement des deux côtés sur le chemin de transport (6).

9. Dispositif de transfert selon la revendication 1, **caractérisé en ce qu'**une longueur des commandes de moyens de traction (15a, b) correspond approximativement à la largeur (7) du chemin de transport (6), et que les commandes de moyens de traction (15a, b) sont disposées entre des profilés de cadre (5) de la première installation de transport (1).

10. Dispositif de transfert selon la revendication 1, **caractérisé en ce que** les commandes de moyens de traction (15a, b) sont décalées selon la même longueur dans leur direction longitudinale l'une relativement à l'autre et font saillie par leurs extrémités frontales opposées latéralement à des profilés de cadre (5) s'étendant parallèlement dans la direction de transport (3) des marchandises (4) à une distance de la première installation de transport, et leurs arêtes frontales s'étendent parallèlement à la direction longitudinale de la première installation de transport (1).

11. Dispositif de transfert selon la revendication 1, **caractérisé en ce que** les commandes de moyens de traction (15a, b) sont décalées selon la même longueur dans leur direction longitudinale et sont disposées entre les profilés de cadre (5) de la première installation de transport (1) s'étendant parallèlement dans la direction de transport (3) des marchandises (4) à une distance, et leurs arêtes frontales s'étendent parallèlement à la direction longitudinale de la première installation de transport (1).

12. Dispositif de transfert selon la revendication 1, **caractérisé en ce que** les commandes de moyens de traction (15a, b) présentent chacune une roue d'entraînement (20a, b), au moins une roue de renvoi (20a, b) et/ou des renvois (22) et le moyen de traction (23) guidé autour de la roue d'entraînement et de renvoi (21a, b, 21a, b) et/ou des renvois (22), et que les moyens de traction (23) des commandes de moyens de traction (15a, b) sont entraînés d'une manière synchronisée.

13. Dispositif de transfert selon la revendication 1, **caractérisé en ce que** l'élément de poussée (29), à son côté longitudinal avant, considéré dans la direction d'émission (13) des marchandises à expulser (4), réalise de préférence une face de guidage plane (33) pour la marchandise à expulser (4), où la face de guidage (33) et le plan de convoyage (18) forment un angle approximativement droit.

14. Dispositif de transfert selon la revendication 1, **caractérisé en ce que** chaque agencement d'articulation (36), considéré dans la direction d'émission (13) des marchandises (4) est disposé derrière l'élément de poussée (29) et est prévu entre l'organe d'entraînement concerné (31a, b) et un côté long arrière de l'élément de poussée (29), considéré dans la direction d'émission (13) des marchandises (4).

15. Dispositif de transfert selon la revendication 1 à 14, **caractérisé en ce que** chaque agencement d'articulation (36) présente une articulation de compensation (45), où l'articulation de compensation (45) est logé d'une manière déplaçable autour du deuxième axe (38) s'étendant dans la direction d'émission (13) des marchandises (4) du dispositif de transfert (12), en particulier d'une manière pivotante à l'organe d'entraînement concerné (31a, b) et que l'élément de poussée (29) est logé d'une manière mobile autour du premier axe (37) orienté radialement au deuxième axe (38), en particulier d'une manière pivotante à l'articulation de compensation (45).

16. Dispositif de transfert selon la revendication 1, **caractérisé en ce que** chaque agencement d'articulation (36) présente une articulation de compensation (45) qui est formée par un élément de ressort, en particulier un élément de ressort en caoutchouc, prévu entre deux plaques d'appui, où une plaque d'appui est reliée de manière solidaire en mouvement à l'organe d'entraînement concerné (31a, b) et l'autre plaque d'appui à l'élément de poussée (29).

17. Dispositif de transfert selon la revendication 1, **caractérisé en ce qu'**une deuxième unité de poussée (30) est prévue qui comprend un autre élément de poussée (29) déplaçable d'une position de départ latéralement à côté du chemin de transport (6) des marchandises (4) dans une position de travail dans le chemin de transport (6) des marchandises (4), pour l'expulsion d'une marchandise (4), et **en ce que** les commandes de moyens de traction (15a, b) présentent dans la direction d'émission (13), à un écart l'un de l'autre, et dans un plan s'étendant parallèlement à la direction de transport (3) des marchandises (4) le long de la première installation de transport (1) des organes d'entraînement (31a, b) fixés par paire d'une manière opposée aux moyens de traction (23) où l'autre élément de poussée (29) s'étend d'une manière continue entre les autres organes d'entraînement (31a, b) et s'étend toujours sensiblement parallèlement à la direction de transport (3) des marchandises (4) et est logé, par respectivement un agencement d'articulation (36), d'une manière déplaçable autour du premier axe (37) s'étendant verticalement au plan de transport (18) des marchandises (4) et parallèlement à la direction d'émission (13) du dispositif de transfert (12), en particulier d'une manière pivotante à chaque autre organe d'entraînement (31a, b) du premier et du deuxième moyen de traction (23).

18. Dispositif de transfert selon la revendication 17, **caractérisé en ce qu'**un écart entre les éléments de poussée (29) est plus grand qu'une largeur maximale (56) de la marchandise (4) mesurée perpendiculairement à la direction longitudinale de la première installation de transport (1).

19. Dispositif de transfert selon la revendication 17, **caractérisé en ce que** l'autre élément de poussée (29) est formé par un profilé longitudinal semblable à une règle et s'étend d'une manière continue entre les autres organes d'entraînement (31a, b) respectivement commandes de moyens de traction (15a, b) à une petite distance au-dessus du plan de transport (18).

20. Dispositif de transfert selon la revendication 17, **caractérisé en ce que** l'autre élément de poussée (29) est formé par un profilé de peigne dont les dents sont orientées vers le bas vers les moyens de traction (23) et plongent entre des organes de transport avoisinants (9) dans une section de transport (8b) de la première installation de transport (1), et qu'une arête inférieure (54) s'étend en dessous du plan de transport (18).

21. Dispositif de transfert selon la revendication 17, **caractérisé en ce que** l'autre élément de poussée (29) présente une longueur (34) qui correspond au moins à la moitié de la dimension longitudinale maximale (35) de la marchandise à pousser (4).

22. Installation de transport (1) pour le transport de marchandises (4) le long d'un chemin de transport (6) qui est divisé en au moins trois sections de transport (8a, b, c) et que chaque section de transport (8a, b, c) présente au moins un organe de transport (9), avec un dispositif de transfert (12) dans la section de transport médiane (8b) pour le transport selon le besoin de marchandises (4) transportées en une rangée sur la première section de transport (8a) sur une autre installation de transport (14) disposée en aval du dispositif de transfert (12) dans la direction d'émission (13) des marchandises (4), ledit dispositif de transfert (12) comprenant au moins deux commandes de moyens de traction (15a, b) s'étendant parallèlement à une distance en biais à la direction longitudinale à la première installation de transport (1), **caractérisée en ce qu'**il est réalisé entre des extrémités frontales orientées les unes vers les autres des sections de transport (8a, b, c) qui se font suite dans la direction de transport (3) des marchandises (4) respectivement une fente d'écartement (17) s'étendant parallèlement aux commandes de moyens de traction (15a, b) au moins sur toute la largeur (7) du chemin de transport (6) ou sur une partie de la largeur (7) du chemin de transport (6), et que chaque fente d'écartement (17) est traversée par chaque commande de moyen de traction (15a, b) disposée en dessous du plan de convoyage horizontal (18) des sections de transport (8a, b, c) du dispositif de transfert (12), et que le dispositif de transfert (12) est réalisé selon l'une des revendications 1 à 21.
